Europäisches Patentamt

European Patent Office

Office européen des brevets

(11) Veröffentlichungsnummer: **0 326 645 B1**

(12) **EUROPÄISCHE PATENTSCHRIFT**

(45) Veröffentlichungstag der Patentschrift: **22.07.92**

(21) Anmeldenummer: **88115279.7**

(22) Anmeldetag: **17.09.88**

(51) Int. Cl.⁵: **F16L  19/04**

(54) **Hochdruckrohrkupplung einer Hydraulikarmatur.**

(30) Priorität: **03.02.88 DE 8801266 U**

(43) Veröffentlichungstag der Anmeldung:
**09.08.89 Patentblatt  89/32**

(45) Bekanntmachung des Hinweises auf die
Patenterteilung:
**22.07.92 Patentblatt  92/30**

(84) Benannte Vertragsstaaten:
**BE DE FR IT NL**

(56) Entgegenhaltungen:
**DE-U- 8 711 735**
**US-A- 2 035 978**
**US-A- 2 489 928**

(73) Patentinhaber: **Eifeler Maschinenbau H. Heinen GmbH & Co
Heinenstrasse 9-15
W-5358 Bad Münstereifel(DE)**

(72) Erfinder: **Bauer, Günter
Vogelsrather Weg 1
W-4056 Schwalmtal-Waldniel(DE)**

(74) Vertreter: **Bauer, Hubert, Dipl.-Ing.
Am Keilbusch 4
W-5100 Aachen(DE)**

EP 0 326 645 B1

## Beschreibung

Die Erfindung betrifft eine Hochdruckrohrkupplung einer Hydraulikarmatur als lösbare Verbindung eines ein Außengewinde und einen sich zum Rohrlängsende hin aufweitenden Innenkonus aufweisenden Rohrstutzens, insbesondere eines Verschraubungsstutzens, vorzugsweise nach DIN 2353, und eines Rohrs mit einem in dessen zu kuppelndes Längsende zum Aufweiten eines Rohrendstücks einzutreibenden, einen Längsdurchgang aufweisenden Bördelkegel, dessen kleinster Außendurchmesser etwa gleich dem Rohrinnendurchmesser ist, ferner mit einem einen Längsdurchgang aufweisenden Schweißnippelkopf mit dem Innenkonus des Rohrstutzens angepaßtem Außenkonus und mit einer außen auf dem zweiten Rohr bis zur Anlage an einem auf der durch Eintreiben des Bördelkegels zu bildenden Aufweitung liegenden Klemmring axial verschiebbaren, in das Außengewinde des Rohrstutzens einzuschraubenden Überwurfmutter.

In der US-A-20 35 978 wird eine Rohrkupplung mit einem flexiblen Rohrverbindungsstück beschrieben. Das anzuschließende Rohrende wird auf irgendeine Weise aufgeweitet und in einen entsprechend kegelförmig ausgebildeten, umlaufenden Schlitz des flexiblen Verbindungsstücks eingeschoben. Diese Kupplung soll es erlauben, das Rohr leicht relativ zur Anschlußstelle zu bewegen, ohne das Metall des Rohrs übermäßig zu beanspruchen. Derartig flexible Rohrkupplungen sind in der Lebensdauer auf diejenige des flexiblen Verbindungsstücks beschränkt. Die Temperaturbelastbarkeit hängt von der Hitzebeständigkeit des Verbindungsstücks ab.

Rohrverbindungen eingangs genannter Art werden in Hochdruckhydraulikarmaturen, z. B. bei Pressen, eingesetzt, in denen Drücke in der Größenordnung von 420 bar vorkommen. Die Kupplung muß hohe mechanische Belastungen, wie Druckschläge, Schwingungen und Biegewechselmomente, sowie große thermische Schwankungen beherrschen können. In einer in der Praxis eingeführten Rohrkupplung eingangs genannter Art wird in das Rohr ein Bördelkegel eingetrieben, an den auf seiner dem Rohrstutzen zuzuwendenden Seite ein mit einem O-Ring ausgestatteter Konus zum Einsetzen in ein entsprechend konisch geöffnetes Rohrende angeformt ist. Diese Rohrverbindung ist thermisch nur bis zu einer Temperatur belastbar, die für den als Dichtung verwendeten O-Ring zulässig ist.

Zum Herstellen einer Hochdruckrohrkupplung wird in das konisch geöffnete Ende des Rohrs bzw. des Verschraubungsstutzens auch ein sogenannter Schweißnippelkopf eingesetzt, an den ein Längsende des Rohrstutzens als Stoßverbindung mit Hilfe einer Überwurfmutter anzupressen ist. Ein dem Schweißnippelkopf entsprechendes Bauteil ist schon als ein einziges Drehteil zusammen mit dem Bördelkegel ausgebildet worden. Das trifft zu bei der oben beschriebenen, in der Praxis eingeführten Rohrkupplung, bei der das aufgeweitete Längsende des Rohrs nur bis maximal zum größten Durchmesser dieses an beiden Enden konusförmig sich verjüngenden Bauteils heranreicht.

Ein Doppelkegel vorgenannter Art wird auch in einer Hydraulikhochdruckrohrkupplung gemäß DE-U-87 11 735 vorgesehen. Hierbei ist der Doppelkegel vollkommen in das aufzuweitende Rohrende einzutreiben, derart, daß das den zum Rohrlängsende hin abfallenden Teil des Doppelkegels umgebende Rohrendstück beim Eintreiben in den Innenkonus des Rohrs bis zum festen Anliegen zwischen Innen- und Außenkonus zu stauchen ist. Diese Ausführung erlaubt zwar ein beliebig häufiges Öffnen und Lösen der Rohrverbindung, sie erfordert aber neben der Überwurfmutter als zusätzliches Bauteil noch einen zwischen Überwurfmutter und Aufweitung des Rohrs einzufügenden, gesonderten Klemmring.

Der Erfindung liegt die Aufgabe zugrunde, ein in die Kupplung zwischen einem genormten Verschraubungsstutzen und einer Überwurfmutter lösbar und bei Drücken in der Größenordnung von 420 bar ausreißfest und dicht einzusetzendes Rohrendstück zu schaffen. Die erfindungsgemäße Lösung besteht bei einer Hochdruckrohrkupplung eingangs genannter Art darin, daß der Schweißnippelkopf und der Klemmring aus einem einzigen Drehteil bestehen.

Durch die Erfindung wird eine Rohrkupplung geschaffen, bei der das anzuschließende Rohrendstück in einen zwischen einem gesonderten Bördelkegel und dem Innenkonus des an dem Schweißnippelkopf angeformten Klemmrings aufgespannten Bördelraum einzutreiben ist. Bei diesem erfindungsgemäßen Bördelraum handelt es sich also um einen sich von der offenen Seite her in axialer Richtung nach innen aufweitenden Ringspalt. Die erfindungsgemäße Hydraulik-Hochdruckrohrkupplung erfordert demgemäß als Sonderteil nur den auf seinem einen Längsende den Schweißnippelkopf und auf seinem anderen Längsende den Klemmring bildenden Drehkörper sowie einen davon getrennten, üblichen Bördelkegel. Sowohl der Längsdurchgang des Bördelkegels als auch derjenige des Schweißnippelkopfs können mit einer lichten Weite ausgestattet werden, die gleich dem Innendurchmesser des aufzuweitenden Rohrs ist. Verbesserungen und weitere Ausgestaltungen der Erfindung werden in den Unteransprüchen beschrieben.

Anhand der schematischen Darstellung eines Ausführungsbeispiels werden Einzelheiten der Erfindung erläutert.

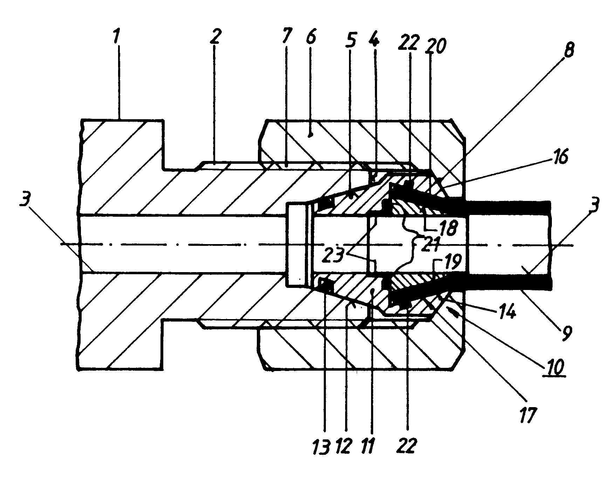

In der beiliegenden Zeichnung wird eine Hoch-

druckrohrkupplung einer Hydraulikarmatur darge-stellt, zu der ein bevorzugt als Rohrverschraubungsstutzen nach DIN 2353 ausgebildeter Rohrstutzen 1 mit Außengewinde 2, Längsdurchgang 3 und einem sich zum Längsende 4 hin aufweitenden Innenkonus 5, sowie eine Überwurfmutter 6, bevorzugt nach DIN 3870, mit dem Außengewinde 2 entsprechendem Innengewinde 7 und mit einer Innenschulter 8 gehören. Das mit dem Rohrstutzen 1 zu verbindende Rohr 9 besitzt ein insgesamt mit 10 bezeichnetes Anschlußstück, dessen Außenform zur Anlage an dem Innenkonus 5 des Rohrstutzens 1 und an der Innenschulter 8 der Überwurfmutter 6 ausgebildet ist.

Das Anschlußstück 10 besteht aus einem nach Art eines Schweißnippelkopfes ausgebildeten Endkonus 11, durch den die Längsbohrung 3 hindurchführt und der an seiner dem Innenkonus 5 zugewendeten Konusfläche 12 mit einem Dichtring 13 ausgestattet werden kann. An den Endkonus 11 wird ein nach Art eines Klemmrings 14 ausgebildeter Ansatz, z. B. durch Drehen, angeformt, der einen sich in Richtung auf den Endkonus 11 von außen nach innen aufweitenden Innenkonus 15 besitzen und dessen der Innenschulter 8 der Überwurfmutter 6 zugewandte Außenschulter 16 zum flächigen Anliegen von Innenschulter 8 und Außenschulter 16 ausgebildet werden soll.

Das anzukuppelnde Rohr 9 besitzt im Bereich innerhalb des Anschlußstücks 10 eine Aufweitung 17, die durch Eintreiben eines einen Außenkonus 18 aufweisenden Bördelkegels 19, ebenfalls mit Durchbohrung 3, herzustellen ist.

Bei der Montage des Ansatzstücks 10 an das Längsende des Rohrs 9 wird zunächst der Bördelkegel 19 in die noch leere Öffnung des Innenkonus 15 des Klemmrings 14, in etwa zentriert, eingesetzt oder mit Zylinderansatz 23 eingepreßt. Ersichtlich darf der größte Durchmesser des Bördelkegels 19 nicht größer als der kleinste Durchmesser des Innenkonus 15 sein. In den zwischen dem Außenkonus 18 des Bördelkegels 19 und dem Innenkonus 15 des Klemmrings 14 gebildeten, sich konusförmig von von der axialen Öffnung aus nach innen hin erweiternden Bördelraum 20 wird das Enstück des Rohrs 9 eingetrieben. Die den Bördelraum 20 radial begrenzenden Konusflächen 15 und 18 besitzen überall im wesentlichen den gleichen radialen Abstand. Dieser entspricht der radialen Stärke der Rohrwandung im Bereich der Aufweitung.

Da das im Bördelraum 20 in Form einer Aufweitung 17 aufgespreizt eingeklemmte Rohrendstück zwischen dem Innen- und dem Außenkonus 15, 18 flächig eingeklemmt wird, ist ein Ausreißen auch bei ungünstigen Belastungen nicht zu befürchten, auch ergibt sich durch die flächige Einklemmung eine ausgezeichnete Dichtung. Zusätzlich können Dichtringe 21 bzw. 22 an der Stoßfläche zwischen Bördelkegel 19 und Endkonus 11 und/oder zwischen Innenkonus 15 und Außenkonus 18 vorgesehen werden; alternativ kann ein Preßsitz 23 die Abdichtung zum Außenkonus 18 und Innenkonus 15 übernehmen.

Bezugszeichenliste

| | | |
|---|---|---|
| 1 = | | Rohrstutzen |
| 2 = | | Außengewinde |
| 3 = | | Längsdurchgang |
| 4 = | | Längsende (1) |
| 5 = | | Innenkonus (1) |
| 6 = | | Überwurfmutter |
| 7 = | | Innengewinde (6) |
| 8 = | | Innenschulter (6) |
| 9 = | | Rohr |
| 10 = | | Anschlußstück (9) |
| 11 = | | Endkonus (10) |
| 12 = | | Konusfläche (11) |
| 13 = | | Dichtring |
| 14 = | | Klemmring |
| 15 = | | Innenkonus (14) |
| 16 = | | Außenschulter (14) |
| 17 = | | Aufweitung (9) |
| 18 = | | Außenkonus (19) |
| 19 = | | Bördelkegel |
| 20 = | | Bördelraum |
| 21 = | | Dichtring |
| 22 = | | Dichtring |
| 23 = | | Preßsitz |

**Patentansprüche**

1. Hochdruckrohrkupplung einer Hydraulikarmatur als lösbare Verbindung eines ein Außengewinde (2) und einen sich zum Rohrlängsende (4) hin aufweitenden Innenkonus (5) aufweisenden Rohrstutzens (1), insbesondere Verschraubungsstutzens, und eines Rohrs (9) mit einem in dessen zu kuppelndes Längsende zum Aufweiten eines Rohrendstücks (17) einzutreibenden, einen Längsdurchgang aufweisenden Bördelkegel (19), dessen kleinster Außendurchmesser etwa gleich dem Rohrinnendurchmesser ist, ferner mit einem einen Längsdurchgang (3) aufweisenden Schweißnippelkopf mit dem Innenkonus (5) des Rohrstutzens (1) angepaßtem Außenkonus (12) und mit einer außen auf dem Rohr (9) bis zur Anlage an einem auf der durch Eintreiben des Bördelkegels (19) gebildeten Aufweitung (17) liegenden Klemmring (14) axial verschiebbaren, in das Außengewinde (2) des Rohrstutzens (1) einzuschraubenden Überwurfmutter (6),
**dadurch gekennzeichnet,**
daß der Schweißnippelkopf (11) und der Klemmring (14) aus einem einzigen Drehteil bestehen.

**2.** Rohrkupplung nach Anspruch 1, **dadurch gekennzeichnet,** daß das aufgeweitete Endstück (17) des Rohrs (9) in den zwischen der Außenfläche (18) des Bördelkegels (19) und der Innenfläche (15) des an den Schweißnippelkopf (11) angeformten Klemmrings (14) aufgespannten Bördelraum (20) eingetrieben ist.

**3.** Rohrkupplung nach Anspruch 1 oder 2, **dadurch gekennzeichnet,** daß die Überwurfmutter (6) mit ihrer das Rohr (9) unmittelbar umgebenden Schulter (8) an der angrenzenden Fläche (16) des Klemmrings (14) abgestützt ist.

**4.** Rohrkupplung nach Anspruch 3, **dadurch gekennzeichnet,** daß die an den Klemmring (14) anstoßende Innenfläche der Schulter (8) der Überwurfmutter (6) umlaufend flächig an der zugeordneten Klemmringfläche (16) anliegt.

## Claims

**1.** A high-pressure pipe coupling of a hydraulic fitting for example a releasable connection of a pipe connecting piece (1), in particular a screw connecting piece, having an external thread (2) and an inner cone (5) widening towards the pipe's longitudinal end (4), and of a pipe (9) having a flange cone (19) which is to be driven-in into the longitudinal end thereof that is to be coupled for the widening of a pipe endpiece (17) and which has a longitudinal passage and the smallest outside diameter of the pipe, furthermore with a welding nipple head having a longitudinal passage (3) and having an outer cone (12) adapted to the inner cone (5) of the pipe connecting piece (1) and with a cap nut (6) which is axially displaceable on the outside on the pipe (9) as far as into abutment against a clamping ring (14) lying on the widening (17) formed by driving-in of the flange cone (19) and which is to be screwed into the outside thread (2) of the pipe connecting piece (1), characterised in that the welding nipple head (11) and the clamping ring (14) consist of a single turned part.

**2.** A pipe coupling according to Claim 1, characterised in that the widened endpiece (17) of the pipe (9) is driven into the flange chamber (20) clamped between the outer surface (18) of the flange cone (19) and the inner surface (15) of the clamping ring (14) integrally formed on to the welding nipple head (11).

**3.** A pipe coupling according to Claim 1 or 2, characterised in that the cap nut (6) is supported with its shoulder (7) directly surrounding the pipe (9) against the contiguous surface (16) of the clamping ring (14).

**4.** A pipe coupling according to Claim 3, characterised in that the inner surface, adjacent to the clamping ring (14), of the shoulder (8) of the cap nut (6) butts in an encircling manner flat against the asociated clamping-ring surface (16).

## Revendications

**1.** Accouplement de tuyau à haute pression d'un accessoire hydraulique constituant un assemblage démontable d'une tubulure (1) présentant un filetage extérieur (2) et une surface conique intérieure (5) s'élargissant vers l'extrémité longitudinale du tuyau (4), et en particulier d'une tubulure à visser et d'un tuyau (9) avec un cône d'évasement (19) présentant un passage longitudinal, à enfoncer dans l'extrémité longitudinale à accoupler de ce tuyau afin d'élargir une pièce terminale (17) du tuyau, le plus petit diamètre extérieur du cône d'évasement étant à peu près égal au diamètre intérieur du tuyau, avec en outre une pièce en forme de tête de raccord à souder présentant un passage longitudinal (3) avec une surface conique extérieure (12) adaptée à la surface conique intérieure (5) de la tubulure (1) et avec un écrou de raccordement (6) à visser dans le filetage extérieur (2) de la tubulure (1), pouvant glisser axialement à l'extérieur du tuyau (9) jusqu'à ce qu'il vienne au contact avec une bague de serrage (14) située dans l'élargissement (17) formé par l'enfoncement du cône d'évasement (19), caractérisé en ce que la pièce en forme de tête de raccord à souder (11) et la bague de serrage (14) sont constituées d'une seule pièce tournée.

**2.** Accouplement pour tuyau selon la revendication 1, caractérisé en ce que la pièce terminale (17) élargie du tuyau (9) est enfoncée dans l'espace d'évasement (20) formé entre la surface extérieure (18) du cône d'évasement (19) et la surface intérieure (15) de la bague de serrage (14) formée sur la pièce en forme de tête de raccord à souder (11).

**3.** Accouplement pour tuyau selon la revendication 1 ou 2, caractérisé en ce que l'écrou de raccordement (6) prend appui par son épaulement (8) entourant immédiatement le tuyau (9) sur la surface avoisinante (16) de la bague de serrage (14).

4. Accouplement pour tuyau selon la revendication 3, caractérisé en ce que la surface intérieure de l'épaulement (8) de l'écrou de raccordement (6) qui appuie sur la bague de serrage (14) repose sur la surface correspondante de la bague de serrage (16) en faisant le tour de celle-ci.